# EUROPEAN PATENT APPLICATION

(11) **EP 1 997 546 A2**
(43) Date of publication of application: **03.12.2008**
(21) Application number: 07022266.6
(22) Date of filing: 16.11.2007
(51) Int. Cl.: B01D 24/24

(54) **Geometrically variable filter underdrain header**

(30) Priority: 27.11.2006 US 563309
(71) Applicant: WEATHERFORD/LAMB, INC., Houston Texas 77027 (US)
(72) Inventor: Ekholm, Michael R., Minneapolis MN 55408 (US); Watson, Mark E., Sturbridge Massachusetts 01566 (US); Steinke, Thomas J., MN 55421 (US)
(74) Representative: Shanks, Andrew

(57) **Abstract**

An embedded geometrically variable filter underdrain header and a method for constructing such a filter. Often the variation is a decrease in cross section along the header from the backwash media source, which avoids a pressure loss as liquid is diverted to the laterals along the header. The header is formed inside a filter underdrain basin and is embedded in the basin. The method for constructing the basin and header includes providing a mold for the basin and the header and filling the molds with concrete by pouring concrete into the area between the interior of the mold for the basin and the exterior of the mold for the header. After the concrete cures, the mold for the basin may or may not be removed, while the mold for the header is kept in place.

## Description

### FIELD OF THE INVENTION

The invention relates to filtration systems. In particular, the invention relates to filter underdrain design and construction.

### BACKGROUND OF THE INVENTION

Filtration systems are prevalent tools for filtering water and other liquids. Such systems typically include a basin containing a bed of particulate matter, also known as filtration media, through which travels the liquid to be filtered. The filtration media typically comprise one or more layers of sand, gravel, etc., of various types and sizes, which are well-known in the art. The filtration media are supported by an underdrain.

The underdrain surface supporting the filter media typically includes orifices in fluid communication with minor passages leading to a lower chamber. These orifices are smaller than the size of the adjacent filtration media particles, so that the liquid can pass through the orifices, but the filter media cannot. The underdrain surface may also be implemented as a screen.

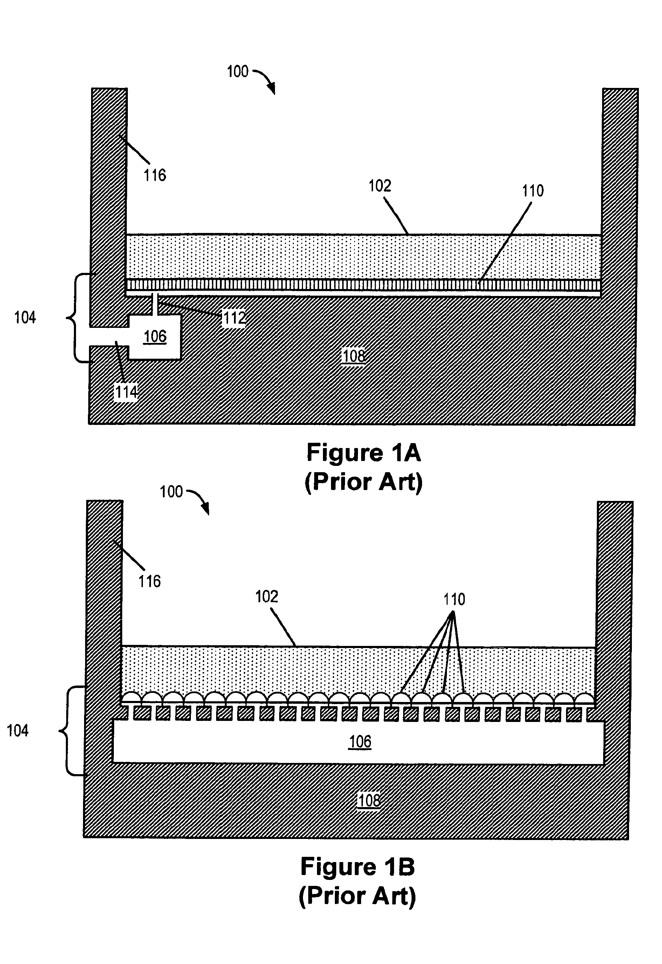

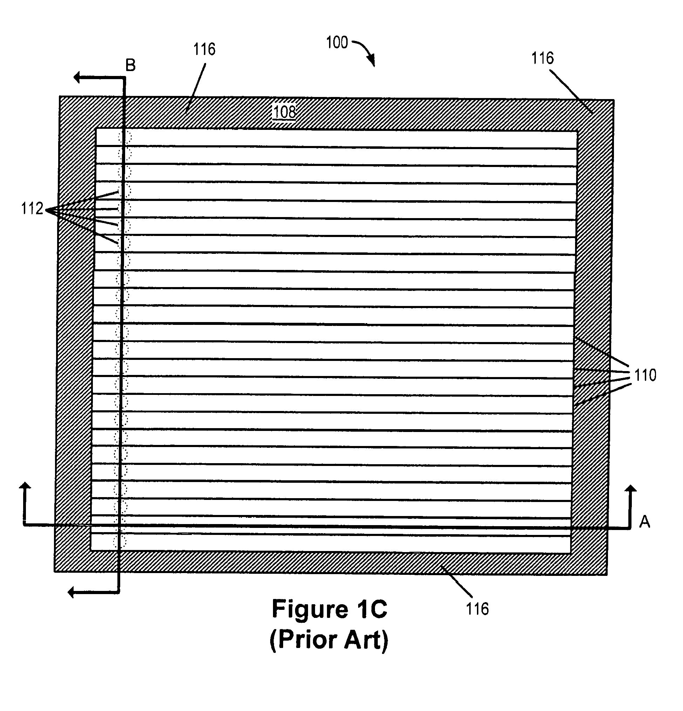

Figure 1C illustrates a plan view of a prior art filter **100.** The filter **100** includes laterals **110,** lain in a basin **108.** Figure 1A illustrates a view of filter **100** across one lateral at cross section A of Figure 1C. Figure 1B illustrates a view of filter **100** across all the laterals **110** at cross section B of Figure 1C. Each lateral's **110** top surfaces are joined together side-by-side between the basin walls **116** so that the combined top surfaces of the laterals form the top surface of the underdrain (**104,** Figures 1A-1B).

Each lateral **101** is connected to a header **106** along the length of the header **106** by a major passage **112.** Each lateral **110** has a screen through which the filtered liquid may travel to reach the header **106** via its major passage **112.** Historically, each header's **106** cross-sectional area has been the same along the length of header **106.**

In operation, unfiltered liquid is passed through the filtration media. The liquid travels through the spaces between filtration media particles, while impurities (*i.e.,* suspended solids) in the liquid are trapped and thereby filtered out of the liquid. The filtered liquid may then be directed elsewhere for use or further treatment. Eventually, the filtration media becomes blocked by the trapped impurities. Thus, filtration systems are typically cleaned by forcing liquid and/or air or another gas backwards through the filtration media, in a process known as backwashing. Backwashing is carried out by receiving water from a backwashing source **114** in the header **106** and distributing the water through the header **106** to each lateral **110.** The backwash flows through the passages **112** to each lateral **110,** out of the orifices (not shown) in each lateral, and backwards through the filtration media **102.**

It is highly desirable that backwash flow be uniformly distributed throughout the filter bed. A non-uniform backwash flow is problematic because too little flow provides little cleaning effect, while too much flow causes filter media to be carried upward and lost to disposal. Non-uniform backwashing may also cause mixing of the filtration media's layers and other undesirable effects.

Non-uniform backwashing may be caused by unequal flow to each lateral **110.** This unequal flow may be caused by pressure drops along the length of the header **106.** The pressure drop is caused by the flow diverted to each lateral **110,** and may be exacerbated by hydraulic losses in the header **106.** Some prior art systems have addressed this problem by varying the size or shape of the passages through which the liquid travels from the header **106** to the lateral **110,** thus controlling the differential pressure between the laterals. Other prior art systems have addressed this problem by reducing the pressure drop along the header **106** by geometrically varying the header cross section. Typically, this geometric variation has taken the form of decreasing the cross section, or tapering the header **106.**

Non-uniform backwashing may also be caused by a "shadowing" effect created by the fluid flowing around the header above the filtration media. An embedded header eliminates this shadowing by placing the header out of the fluid flow path. Prior art embedded headers have included standard pipes embedded in the basin wall or floor.

Both embedding the header in the basin wall and using geometrically variable headers reduce non-uniformity in backwashing flow. An ideal design, therefore, would include a geometrically variable underdrain header embedded in the basin. However, limitations in available construction materials and methods have prevented the construction of such filters. Disclosed herein are designs and construction techniques that address the deficiencies of the prior art.

### SUMMARY OF THE INVENTION

Disclosed herein are designs and construction techniques for embedded geometrically variable filter underdrain headers. The header's geometric variation is typically a decrease in cross section along the header. The header is formed inside a filter underdrain basin and is encapsulated by the basin wall or floor.

Constructing the filter includes providing a basin form and a header mold. Constructing the filter further includes filling the basin form with concrete by pouring concrete. After the concrete cures, the header mold is kept in place. Although the header mold defines the header, it does not constitute the header. The basin wall or floor in which the header is embedded provides the structural support for the header. Thus, the mold need not be made to withstand the operating pressures the header will encounter, which allows greater flexibility and precision in forming the header.

### BRIEF DESCRIPTION OF THE DRAWINGS

Figures 1A-1C illustrate a prior art filter.

Figures 2A-D illustrate a filter according to the present disclosure.

Figures 3A-C illustrate a geometrically variable underdrain header according to the present disclosure.

Figures 4A-C show a geometrically variable underdrain header according to the present disclosure.

Figures 5A-D show a geometrically variable underdrain header according to the present disclosure.

Figures 6A-D show a geometrically variable underdrain header whose cross section decreases continuously and non-linearly according to the present disclosure.

Figures 7A-D show a geometrically variable underdrain header whose cross section decreases continuously and non-linearly along the length of the header according to the present disclosure.

Figures 8A-C show a frusto-conical geometrically variable underdrain header according to the present disclosure.

Figures 9A-B illustrate a circular filter according to the present disclosure.

Figure 10 illustrates a substantially continuous header with an initial boundary area.

Figures 11A-D show an embedded geometrically variable underdrain header with an exposed upper surface flush with the floor of the basin.

Figures 12A-12F show a basin form and a geometrically variable underdrain header mold according to aspects of the present disclosure.

Figures 13A-13E show the assembly of a basin form and a geometrically variable underdrain header mold according to aspects of the present disclosure.

Figures 14A-B show construction methods for a geometrically variable underdrain header mold.

Figures 15A-B show construction methods for a geometrically variable underdrain header mold.

Figures 16A-D show an internally reinforced geometrically variable underdrain header mold.

Figures 17A-D show a geometrically variable underdrain header mold externally reinforced with rebar.

Figures 18A-D show a construction method for steel sheets having channels.

Figures 19A-C illustrates a method of manufacturing a header mold with an air pipe assembly.

### DETAILED DESCRIPTION OF THE INVENTION

An exemplary filter having an embedded geometrically variable header will now be described with reference to the accompanying drawings. An embedded header is defined here as a header not protruding from the basin. Specific design details have been provided for illustration but should not be considered limiting. Readers of skill in the art will recognize that many variations of filter construction may be implemented consistent with the scope of the invention as described by the appended claims.

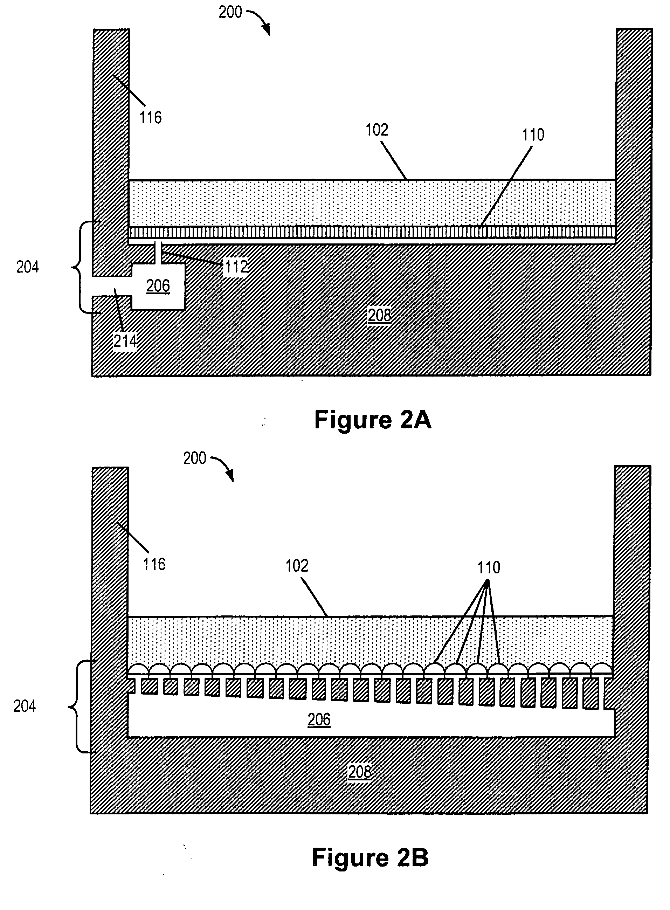

Turning now to Figures 2A-D, filter **200** includes a basin **208,** a filtration medium **102** disposed within the basin **208,** and an underdrain **204** including a geometrically variable underdrain header **206.** The geometrically variable underdrain header **206** is completely encapsulated the floor of the basin **208.** Filter **200** could also be constructed such that the header is completely encapsulated in a wall of basin **208.**

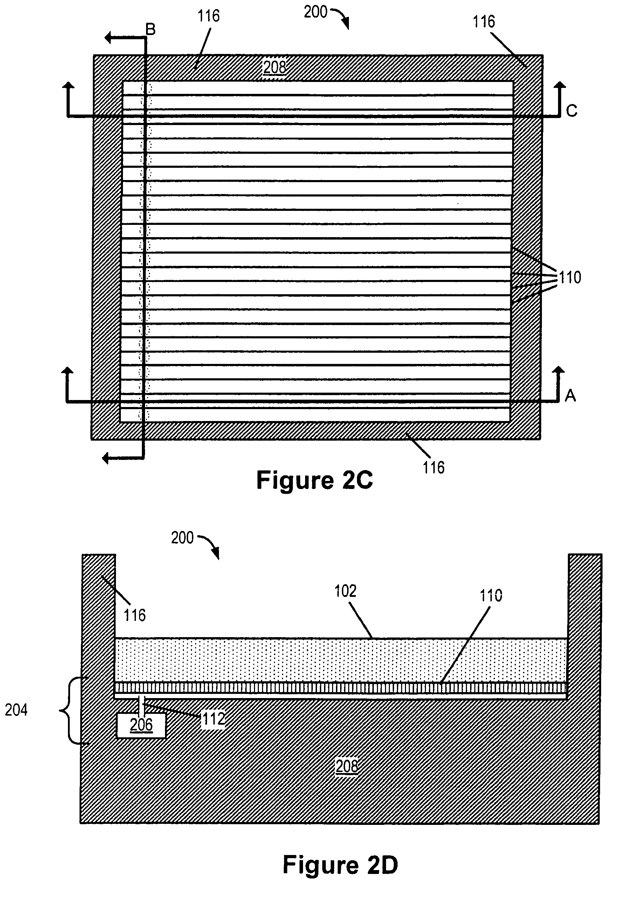

Figure 2C illustrates a plan view of the filter **200.** Figure 2A illustrates a view across one lateral at cross section A. Figure 2B illustrates a view of filter **200** across all the laterals **110** at cross section B. Figure 2D illustrates a view of filter **200** across all the laterals **110** at cross section C. Filter **200** includes laterals **110** with a passage **112** connecting each lateral **110** to the geometrically variable underdrain header **206.** The laterals are preferably Triton^{™} laterals manufactured by Johnson Screens and described in U.S. Patent 4,156,738 ("the '738 patent"), which is hereby incorporated by reference in its entirety. Laterals **110** and their installation are well-known prior art, thus such details are not repeated herein.

As shown in Figures 2A-D, the geometrically variable underdrain header **206** is an oblong passage configured so that the passage narrows along the length of the header **206,** resulting in a continuously decreasing header cross section. Specifically, the header cross section at C (shown in Figure 2D) is smaller than the cross section at A (shown in Figure 2A). By continuously, we mean that the cross section's decrease is non-stepwise.

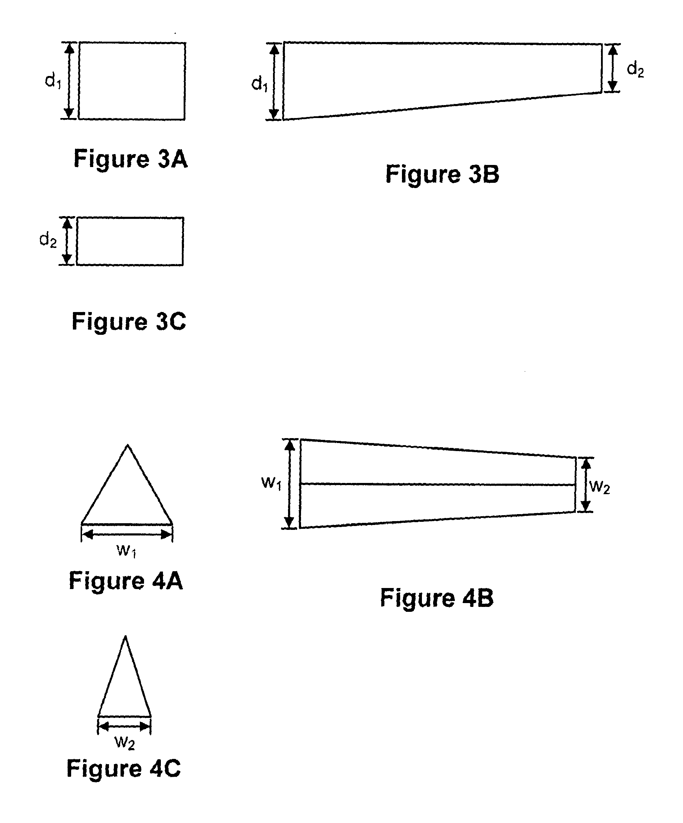

The cross section of the header **206** may be defined by multiple flat sides. The cross section of the illustrated header **206** is four-sided, although the header **206** may have any number of flat or curved sides. The cross section, or at least one dimension of the cross-section (e.g., height, width, radius, etc.) may decrease linearly or non-linearly. Various header designs are illustrated in Figures 3-8.

Figures 3A-C illustrate a header cross section continuously decreasing in depth (d) along the length of the header **206.** Figures 3A and 3C illustrate the cross section of each end of the header **206,** while Figure 3B shows a side view.

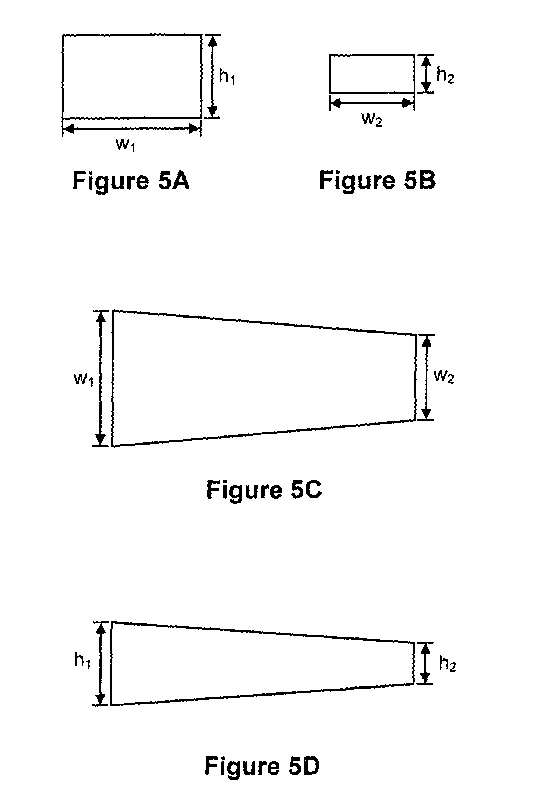

Figures 4A-C illustrate a triangular header cross section continuously and linearly decreasing in width (w) along the length of the header **206.** Figures 4A and 4C illustrate the cross section of each end, while Figure 4B shows a top view of the same header **206.** Figures 5A-D each illustrate a header **206** having a rectangular cross section decreasing in height (h) and width (w) along the length of the header. Figure 5A shows a sectional view of the wide end of the header **206.**
Figure 5B shows a sectional view of the narrow end of the header **206.** Figure 5C shows a top view of the header **206.** Figure 5D shows a side view of the header **206.**

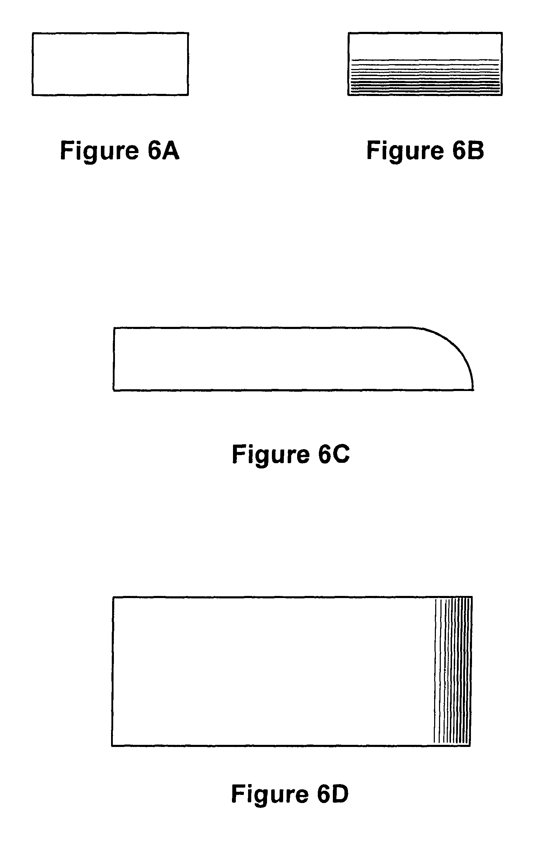

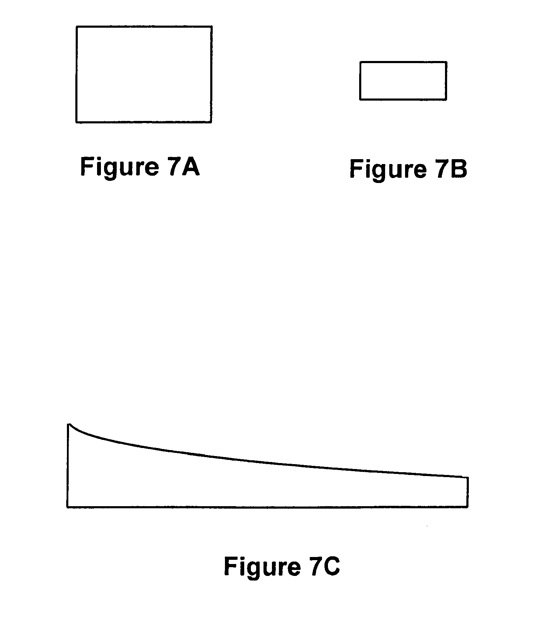

Although the embodiments illustrated above show header dimensions decreasing linearly along the header, the cross section of the header **206** may decrease non-linearly. Figures 6A-D show a header **206** where the cross section's rate of decrease along the length of the header increases. Figure 6A shows the end view of the wide end of the geometrically variable underdrain header **206.** Figure 6B shows the end view of the narrow end of the geometrically variable underdrain header **206.** Figure 6C shows the side view of the geometrically variable underdrain header **206.** Figure 6D shows the top view of the geometrically variable underdrain header **206.** Similarly, Figures 7A-C illustrate a header where the cross section's rate of decrease along the length of the header decreases.
Figure 7A shows the cross section of the wide end of the header **206.** Figure 7B shows the narrow end. Figure 7C shows a side view of the geometrically variable underdrain header **206.**

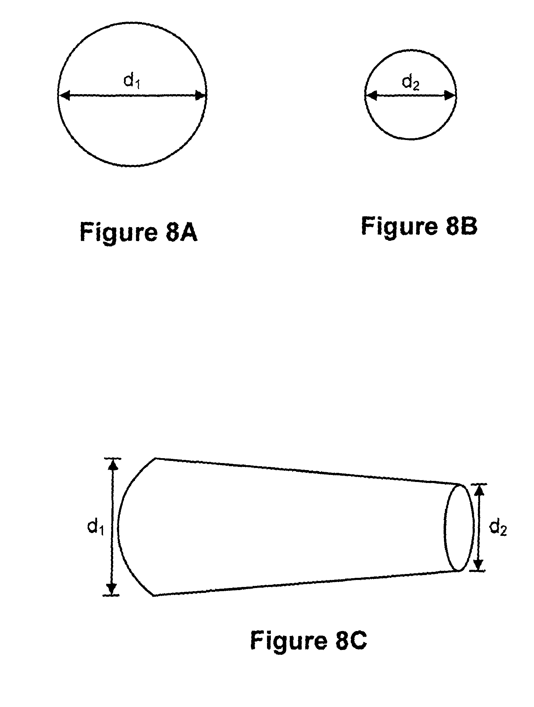

Rather than flat sides, the geometrically variable underdrain header **206** may be defined by a curved manifold that narrows along the length of the header **206.** For example, the header could also be a frusto-conical shell with a circular cross section of decreasing diameter (d), as shown by Figures 8A-C. Figure 8A shows a sectional view at the wide end of the geometrically variable underdrain header **206.** Figure 8B shows a sectional view at the narrow end of the geometrically variable underdrain header **206.** Figure 8C shows a perspective view of the geometrically variable underdrain header **206.**

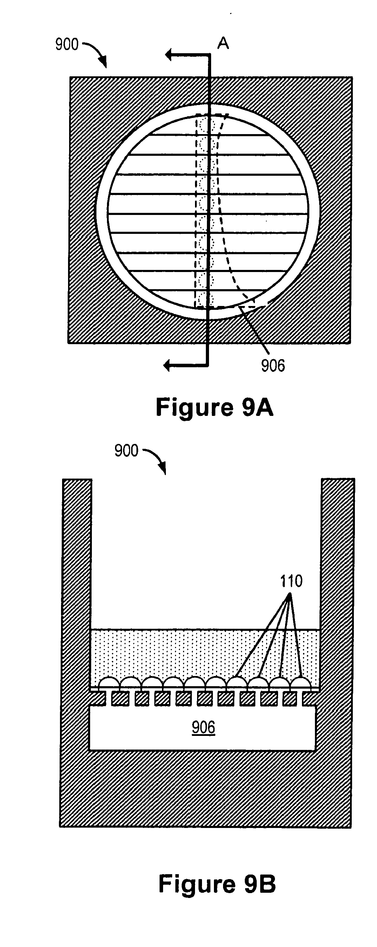

In contrast to the above header designs, in filters where the lateral length decreases along the length of the header, the header cross section may slightly increase after an initial decrease to equalize the pressure and flow increase caused by shorter laterals. Figures 9A and 9B illustrate a plan view and a view across all the laterals **110** at cross section A, respectively, of a circular filter **900** with a header **906** having a cross section that decreases and then slightly increases in a semi-parabolic curve.

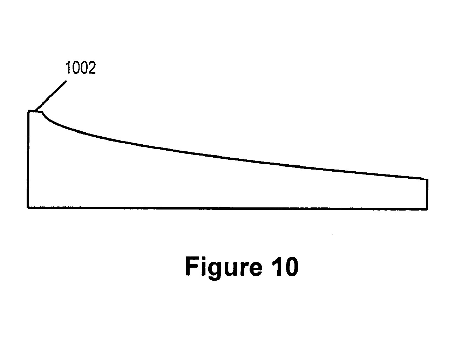

The headers **206** discussed above have continuously varying cross sections. These headers may be contrasted with a step-wise varying header, in which the changes in cross section are not continuous. It will be appreciated by those skilled in the art, however, that a header could be constructed with a short initial portion having one cross section and the remainder having a continuously decreasing cross section. Such headers will perform hydraulically very similarly to a truly continuously decreasing header, and thus should be considered substantially continuous. Figure 10 therefore illustrates a substantially continuous header with an initial boundary area **1002.**

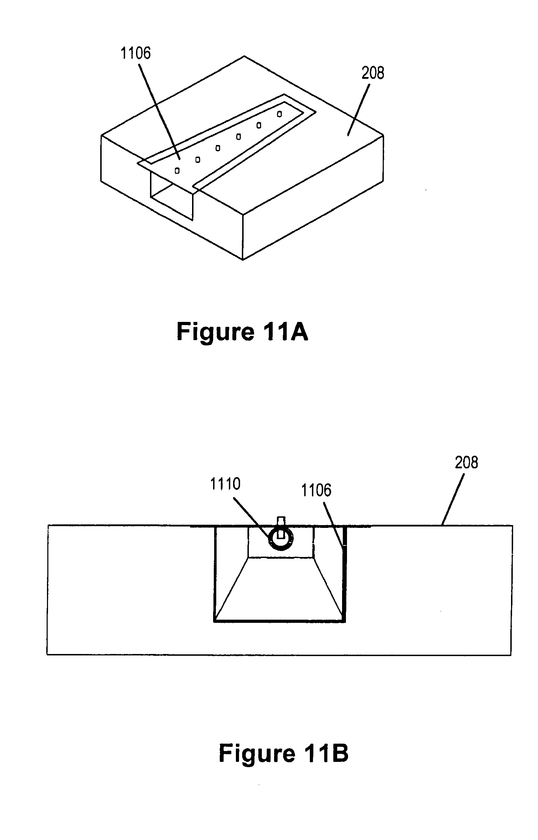

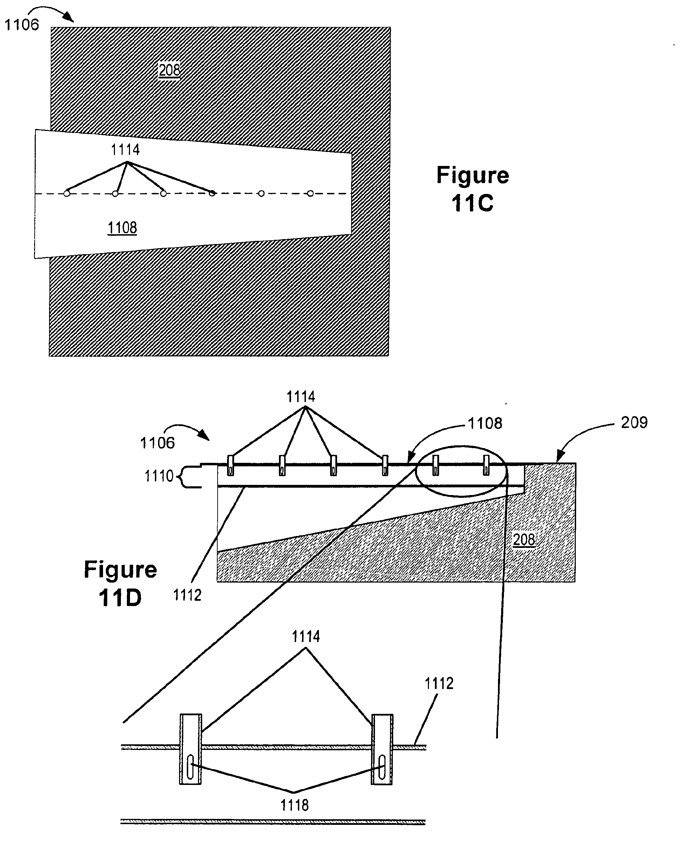

In contradistinction to the headers above, some headers may be embedded without being completely encapsulated. Figures 11A-D show an embedded geometrically variable underdrain header **1106** with an exposed upper surface **1108** flush with the floor **209** of the basin **208.** Figure 11A shows an elevated perspective view of the embedded underdrain header **1106** and basin **208.** Figure 11B shows a front perspective view of the embedded underdrain header **1106** and basin **208.** Figure 11C shows a top view of embedded underdrain header **1106** and basin **208.** Figure 11D shows a cross section of the embedded underdrain header **1106** and basin **208.**

In addition to the passage (not shown) that connects the interior of the header **1106** with the lateral (not shown) for fluid delivery to and from the lateral, in some backwashing systems the header may introduce a gas such as air into the lateral separately during backwashing. For example, the underdrain header **1106** includes an air pipe assembly **1110** connected to an air source for supplying air to the lateral. The air pipe assembly **1110** includes an air distributor pipe **1112** attached to the interior of the underdrain header **1106** and multiple exit pipes **1114** running through the exposed upper surface **1108** in fluid communication with the interior **1116** of the air distributor pipe **1112** and the basin **208.** The exit pipes **1114** each have slots **1118** in the portion of the exit pipe **1114** inside the air distributor pipe **1112.** The slots **1118** connect the inside of an exit pipe with the exterior of the exit pipe for controlling an air plenum in the air distributor pipe **1112.** The use of a slotted exit pipe to produce a plenum is well known in the art, and therefore is not discussed further. Although shown here in connection with a partially encapsulated underdrain header, an air pipe assembly **1110** may also be implemented with any of the fully encapsulated underdrain header designs discussed above.

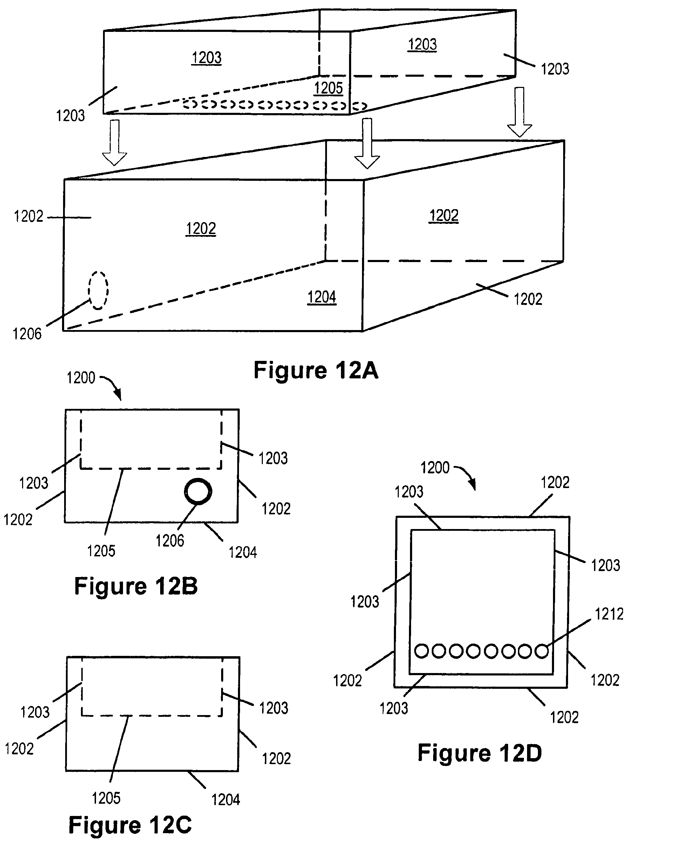

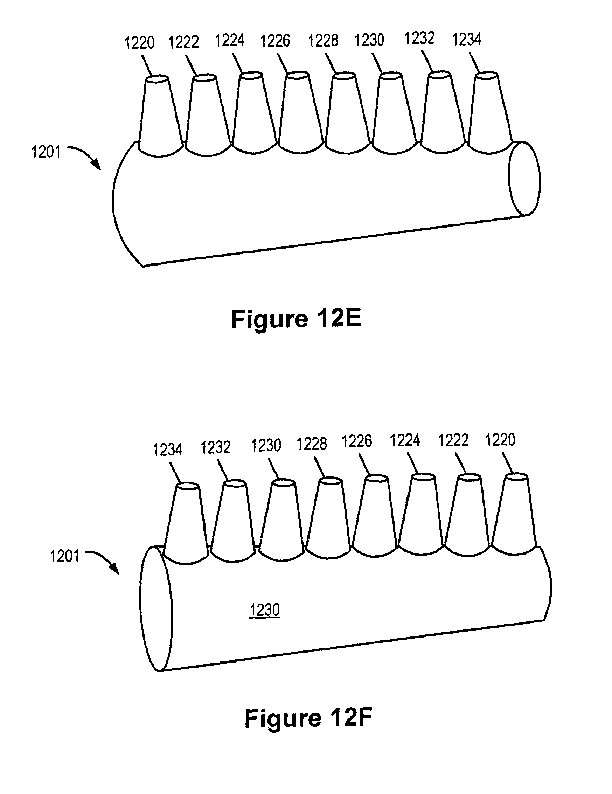

Construction of filters incorporating the header geometries discussed above will now be described, beginning with reference to Figure 12A. Constructing a geometrically variable underdrain filter header **206** generally includes providing a basin form, disposing a geometrically variable underdrain header mold within the basin form, and pouring concrete in said basin form so as to encapsulate the header mold.

Providing a basin form may be carried out by various known prior art techniques, including assembling the basin form on-site or positioning a prefabricated basin form in a desired location. This may include placing an inner basin form component inside an outer basin form component, as shown in Figure 12A. The basin form components may be made of wood, plastic, fiberglass, metal, or any other material that will occur to those of skill in the art.

Figures 12B-D illustrate an exemplary basin form **1200** after assembly.
Figure 12B shows a front view of basin form **1200.** Figure 12C shows a side view of basin form **1200.** Figure 12D shows a top view of basin form **1200.** The outer basin form component **1200** has four outer sides **1202,** and an outer floor **1204.** The inner basin form component **1200** also includes four inner sides **1203** and an inner floor **1205** having openings **1212** for receiving the major passages of the header mold. The basin form **1200** also contains an opening **1206** for the header **206** to be coupled to a backwash media source **214.** Alternatively, this can be done after the pour by connecting the backwash media source **214** to a flange on a header end protruding from the basin form **1200.**

Figures 12E-F show an exemplary geometrically variable underdrain header mold. The header mold **1201** may be formed in any of the header configurations discussed above. The mold **1201** includes a main header body **1236,** and passages **1220-1234** for distributing the backwash media to the laterals (not shown). The interior surface of the mold **1201** may also include supports or turbulence minimization devices. The mold **1201** may also include a mechanism for connecting to the backwash media source, such as a flange.

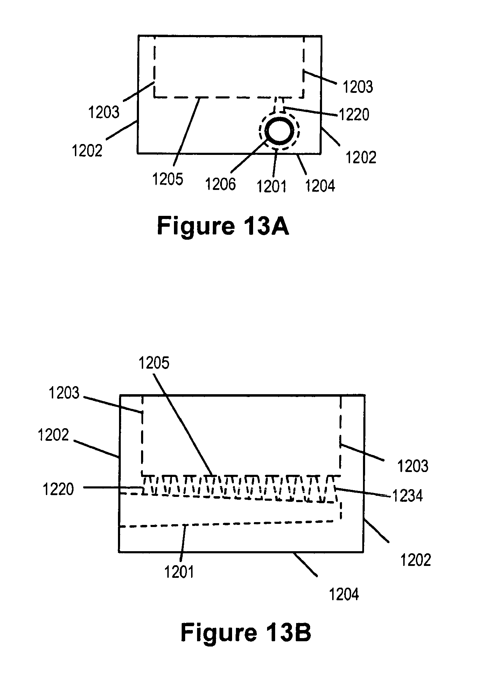

Figures 13A-C show header mold **1201** disposed within a basin form **1200.**
Figure 13A shows a front view of header mold **1201** within basin form **1200.**

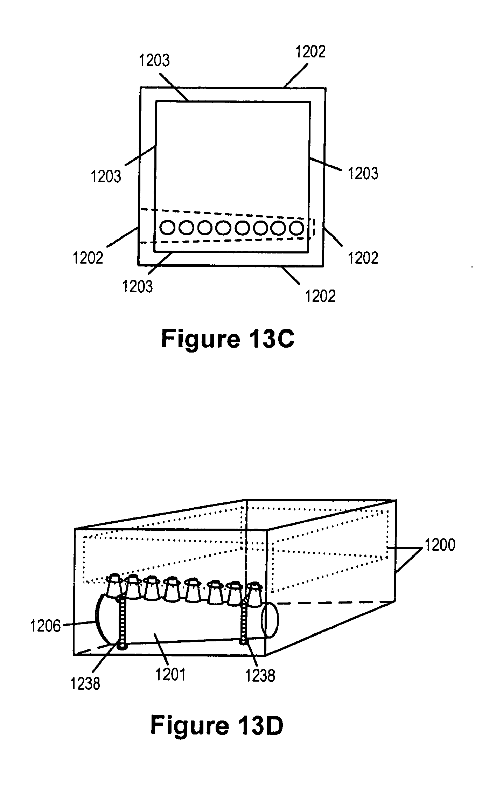

Figures 13B and 13C show a side view and top view, respectively. The mold **1201** is disposed within the basin form **1200** in a position corresponding with the header's final position. The main body **1236** and passages **1220- 1234** are sealingly disposed in openings **1206** and **1212,** respectively. The openings to main body **1236** and passages **1220-1234** are arranged so that no concrete enters the interior of mold **1201.**

It may be necessary to anchor header mold **1401** in place prior to pouring concrete. An anchor **1238** may be attached to an appendage added to the mold **1201** for such a purpose or may be disposed about the mold **1201** itself, as shown in Figure 13D. The anchor **1238** is also attached to the basin form **1200.**

The header mold 1201 may be manufactured by many different processes and from many different materials. For example, the header mold **1201** may be made from sheet steel. Because the concrete around the header mold **1201** forms the actual header structure, the mold for the header may be made from relatively thin (*e*.*g*., 0.120-inch) polished steel sheets. This thinner steel is easier to cut, shape and weld than thicker steel. These polished steel sheets are readily available with a 2B finish, which provides a sufficient surface smoothness for the interior surface of the header **206.** Using such sheets is more efficient and economical than traditional header manufacturing techniques, because no further treatment of the interior header surface is needed.

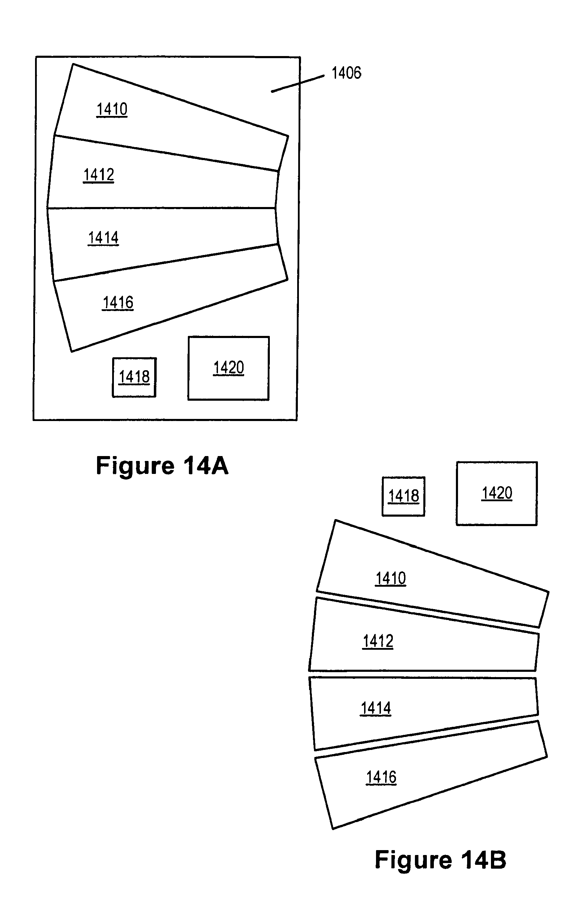

Header mold **1201** may be made by cutting sheet metal to sides of the desired dimensions and welding the sides together to form a continuous shell as illustrated in Figures 14A-B. Figures 14A-B show the sides **1410-1520** before (Figure 14A) and after (Figure 14B) they are cut from a steel sheet **1406.** Because the welds need only hold until the concrete cures, the mold may be fabricated using surface ("fill-in") welds or skip welds instead of full-penetration welds. These lighter welds may be completed more quickly and provide a higher margin of error.

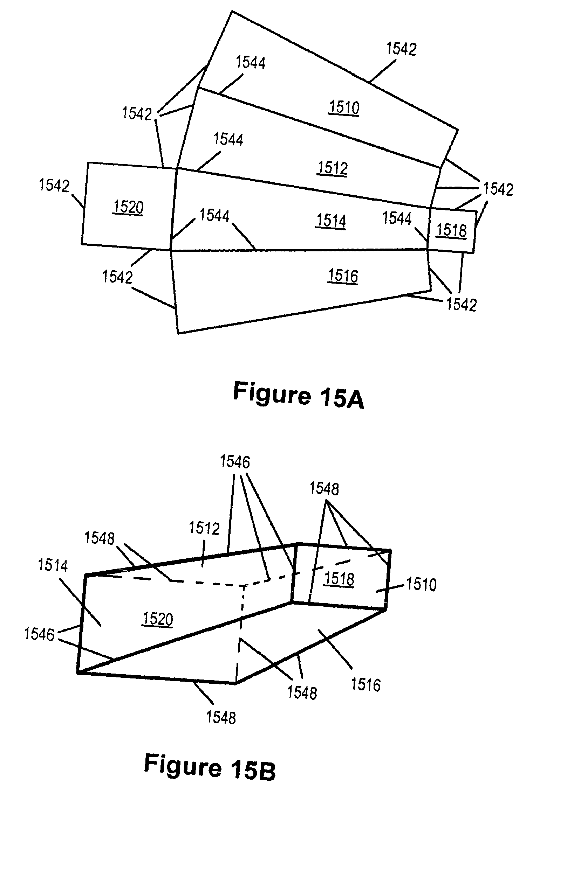

Header mold **1201** may also be manufactured by cutting a sheet of steel to a desired pattern, and then pressing (*i*.*e*., folding) the cut sheet into the desired header form. The pressed sheet may then be welded at the seams to create a continuous shell as illustrated in Figures 15A-15B.

Figures 15A-B show a cut steel sheet **1506** before (Figure 15A) and after (Figure 15B) it is folded along its edge lines **1544** and welded at its sheet edges **1542** to form a header mold **1201** with side panels **1510-1620.** The folds at the sheet's **1506** edge lines **1544** become mold seams **1546,** and welds at the sheet edges form mold seams **1548.**

As described above with reference to Figures 12A-D, the geometrically variable underdrain header **206** may be frusto-conical instead of multi-sided. Such a header mold may be constructed from one or more pieces of steel sheet pressed into a curvilinear shape to comprise at least a portion of frusto-conical mold and welded at the seams to create a continuous shell. The header could also be a spun concrete shell which may optionally be lined with fiberglass, plastic, or a similar material.

Any of the header molds **1201** discussed above may be manufactured by extruding a plastic shell.

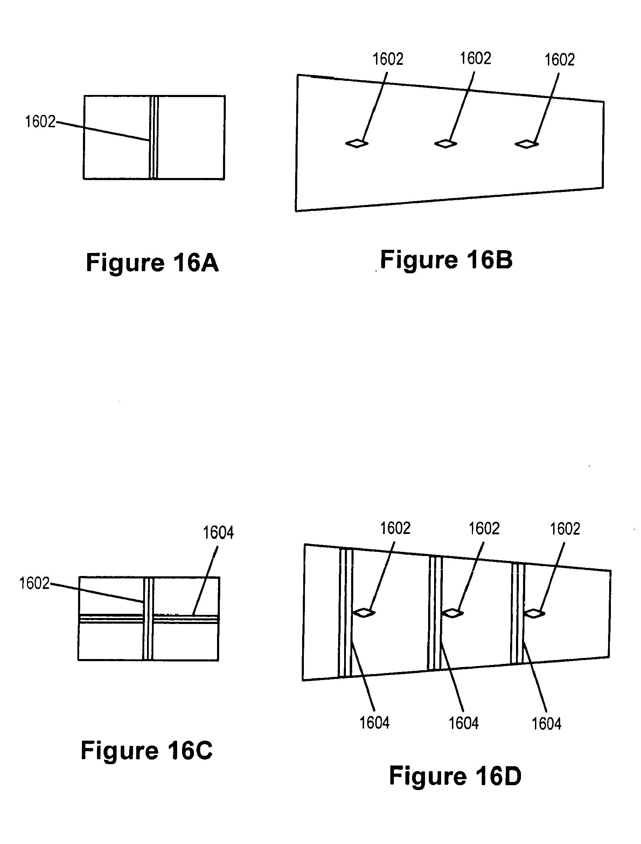

Header mold **1201** may require additional support to prevent the mold from collapsing under the weight of the cement during the pour and before the cement cures. Once the cement cures, it is generally self-supporting, although header **206** may require additional support even after the cement has cured. This support may be interior, exterior, or both. Figures 16A-D show a header mold **1201** with support members attached to the interior. Figures 16A and 16B show a header mold **1201** with vertical columns **1602** attached to the interior of the mold **1201,** from an end view and a top view, respectively. The vertical columns **1602** may be welded in place or otherwise attached to the interior. As illustrated, the vertical columns **1602** are shaped as vanes for turbulence minimization. The metal column of Figures 16A and 16B is shaped and positioned as a vane for minimizing turbulence in liquids traveling through the header by preventing the side-to-side flow of liquid in the header.

Figure 16C and Figure 16D show a geometrically variable underdrain header mold **1201** with vertical columns **1602** and horizontal beams **1604** attached to the interior of the mold **1201,** from an end view at the wide end of the mold and from a top sectional view, respectively. The horizontal beams **1604** in Figures 16C and 16D are also shaped as vanes for minimizing turbulence. The beams **1604** may be attached by any method used to attach the columns **1602.**

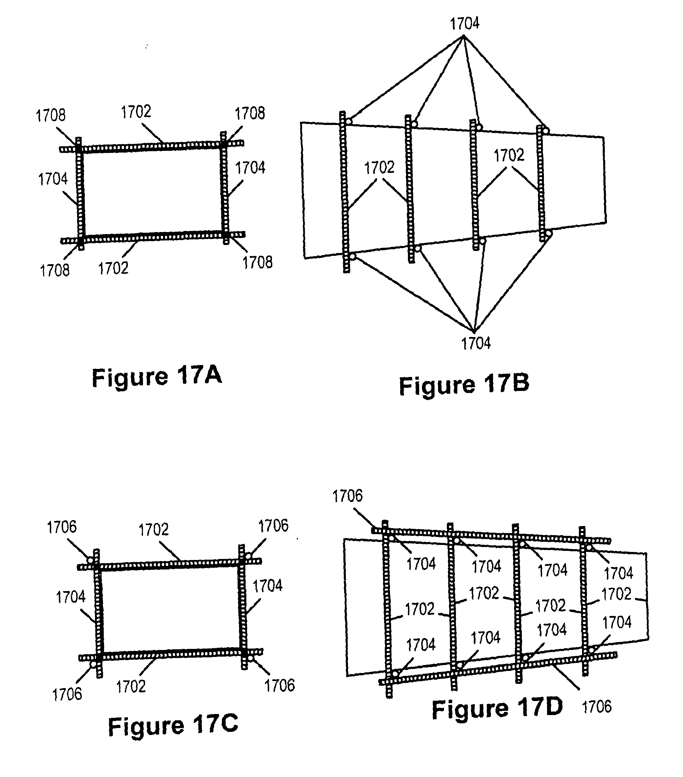

As an alternative to interior support, header mold **1201** may be externally reinforced. In one such arrangement, rebar is welded or otherwise attached to the outside of the mold. Figure 17A shows an end view of a header mold **1201** cross-sectionally reinforced with rebar. Figure 17B shows a top view of the same header mold **1201.** The horizontal rebar **1702** and the vertical rebar **1704** are both welded to the outer surface of the mold **1201.** The horizontal rebar **1702** and the vertical rebar **1704** are attached to each other at attachment points **1708.** The rebar may be attached by welding, fasteners, or wound wire. Alternatively, a single section of rebar may be bent to conform to the shape of the mold **1201.**
Figures 17C and 17D show an end view and a top view, respectively, of cross-sectionally and longitudinally reinforced header mold **1201.** Connection of the longitudinally reinforcing components may be the same as that of the cross sectional components.

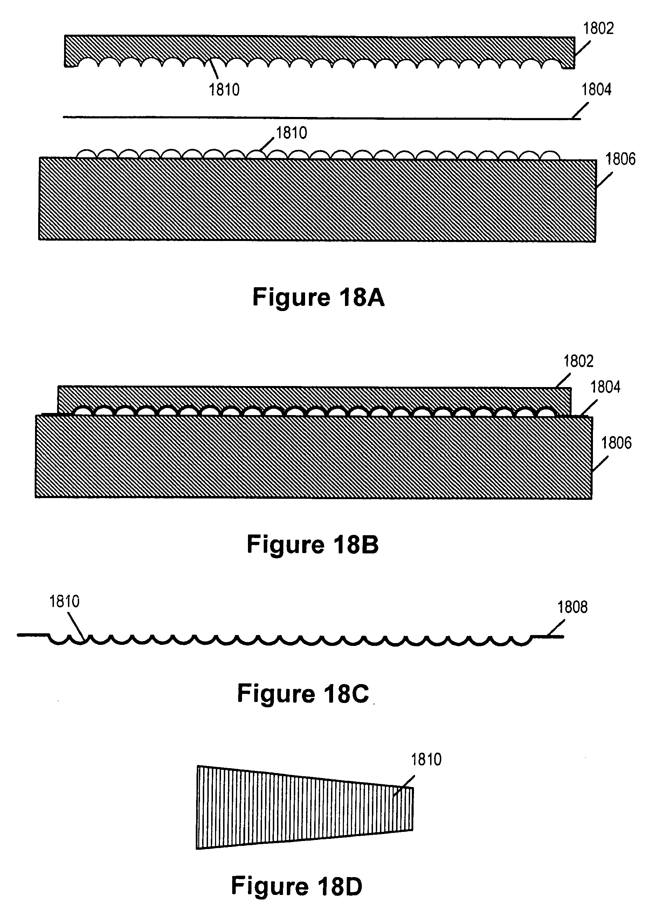

The exterior surface of header mold **1201** may also be manufactured with features that promote the flow of poured concrete around the mold and that prevent the retention of air in the concrete around the mold. Such features may take the form of channels in the header. Figures 18A-D illustrate a process of pressing channels into steel sheets during manufacturing of the geometrically variable underdrain header mold **901.** Figure 18A shows a press in an open position for pressing channels into a steel sheet. The steel sheet **1804** is placed between the upper press plate **1802** and the lower press plate **1806.** The lower press plate **1806** has peaks **1812** and the upper press plate **1804** has valleys **1814,** which are brought together in a pressing action to form corrugations **1810** into the steel sheet **1804.**

Figure 18B shows a press in a closed position, after pressing channels into a steel sheet. After pressing, the pressed steel sheet **1808** has channels **1810.** The pressed steel sheet **1808** may then be used in constructing a geometrically variable underdrain header mold **1201** according to the method disclosed above. Figure 18D below shows the side view of a geometrically variable underdrain header mold **1201** manufactured from one or more steel sheets **1804.**

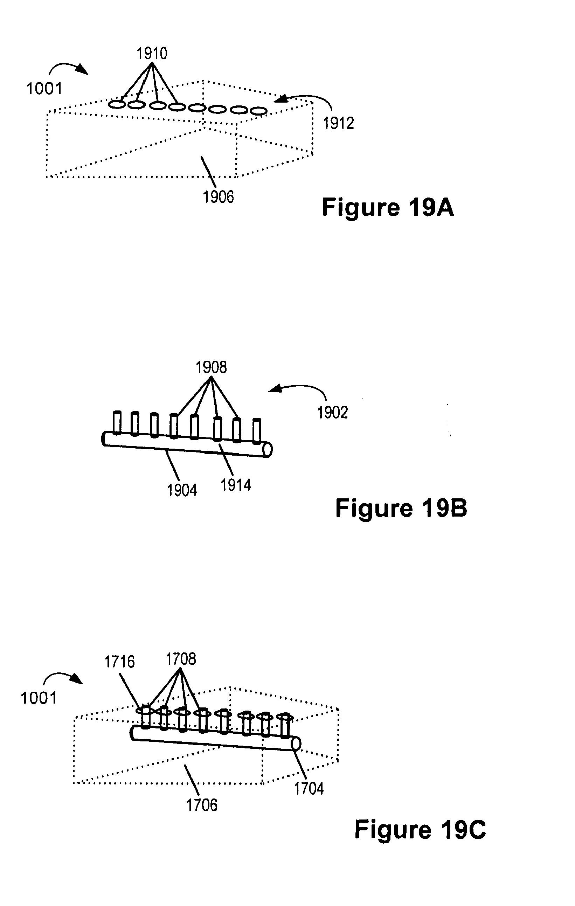

Figures 19A-C illustrate a method of manufacturing a geometrically variable header mold **1201** with an air pipe assembly **1902** as discussed above.
Figure 19A illustrates an exemplary header mold **1201** partially assembled.
Figure 19B shows an exemplary air pipe assembly **1902.** Figure 19C shows an exemplary air pipe assembly **1902** disposed within a header mold **1201.** The interior of the header mold **1201** may be manufactured with an air pipe assembly **1902** by welding, gluing, or otherwise attaching an air distributor pipe **1904** to the interior **1906** of the header mold **1201.** The header mold **1201** is positioned with multiple exit pipes **1908** disposed in ports **1910** in the top surface **1912** of the header mold **1201** so that the exit pipes **1908** are in fluid communication with the interior **1914** of the air distributor pipe **1904** and the area above the top surface **1912.** The manufacture may further include sealing the annulus **1916** between each of the multiple exit pipes **1908** and the port **1910** in which it is disposed by welding, caulking, cementing and so on.

It should be understood that the inventive concepts disclosed herein are capable of many modifications. Such modifications may include modifications in the shape of the molds, the basin, and the header, the precise method of manufacture, and in particular the manner in which the cross-sectional area of the header decreases. To the extent such modifications fall within the scope of the appended claims and their equivalents, they are intended to be covered by this patent.

## Claims

1. A filter comprising:
a basin;
a filtration medium disposed within the basin; and
an underdrain, including a geometrically variable underdrain header embedded in a wall or floor of the basin.

2. The filter of claim 1, wherein the geometrically variable underdrain header is completely encapsulated by a wall or floor of the basin.

3. The filter of claim 1 or 2, wherein the geometrically variable underdrain header comprises a passage having a substantially continuous decrease in cross sectional area along a length of the header.

4. The filter of claim 3, wherein the decrease in cross sectional area comes from a decrease in one header dimension.

5. The filter of claim 3, wherein the decrease in cross sectional area comes from a decrease in more than one header dimension.

6. The filter of claim 3, 4 or 5, wherein the header comprises one or more flat sides.

7. The filter of claim 6, wherein the header cross section is substantially rectangular.

8. The filter of any one of claims 3 to 7, wherein the header is defined by a curved manifold.

9. The filter of claim 8, wherein the header cross section is substantially circular.

10. The filter of claim 9, wherein the header is frusto-conical.

11. The filter of any preceding claim, wherein the geometrically variable underdrain header comprises a passage having a substantially continuous variation in cross sectional area along a length of the header, the variation comprising an initial decrease in cross sectional area along a length of the header followed by an increase in cross sectional area along a length of the header.

12. The filter of any preceding claim, wherein the header is defined by a mold permanently fixed into the basin.

13. The filter of any preceding claim, wherein the geometrically variable underdrain header further comprises an air delivery system attached to the underdrain header.

14. A method of constructing a filter, the filter including an underdrain with an underdrain header adapted for coupling to a backwash media source and for coupling to a plurality of laterals for distributing one or more backwash media from the backwash media source, the method comprising:
providing a basin form;
disposing a geometrically variable underdrain header mold within the basin form; and
pouring concrete in said basin form so as to embed said geometrically variable underdrain header mold.

15. The method of claim 14, wherein pouring concrete in said basin form so as to embed said geometrically variable underdrain header mold comprises completely encapsulating the underdrain header mold in concrete.

16. The method of claim 14 or 15, wherein providing a basin form comprises prefabricating the basin form.

17. The method of claim 14, 15 or 16, wherein the basin form is made of wood.

18. The method of claim 14, 15 or 16, wherein the basin form is made of fiberglass.

19. The method of any one of claims 14 to 18, wherein disposing a geometrically variable underdrain header mold within the basin form comprises anchoring the mold within the basin form.

20. The method of any one of claims 14 to 19, wherein disposing a geometrically variable underdrain header mold within the basin form comprises reinforcing the mold with rebar.

21. The method of any one of claims 14 to 20, further comprising attaching an air delivery system to the underdrain header.

22. A header mold for creating an embedded filter underdrain header, the header mold adapted to be embedded in cement, wherein:
the header mold defines the header; and
the header mold has a substantially continuous decrease in cross sectional area along a length of the header.

23. The mold of claim 22, further comprising internal structural support members.

24. The mold of claim 22 or 23, further comprising channels for facilitating the flow of concrete around the mold.

25. The mold of claim 22, 23 or 24, further comprising channels for facilitating the escape of air from concrete around the mold.

26. The mold of any one of claims 22 to 25, further comprising an anchoring means for anchoring the mold.

27. The mold of any one of claims 22 to 26, further comprising an air delivery system.

28. A method of making a header mold for use in creating an embedded filter underdrain header in a basin, comprising forming the mold with a substantially continuous decrease in cross sectional area from a first end of the geometrically variable underdrain header mold to a second end of the geometrically variable underdrain header mold.

29. The method of claim 28, further comprising reinforcing the mold with rebar.

30. The method of claim 28 or 29 comprising:
cutting sheet metal to form sides of the geometrically variable underdrain header mold; and
welding the sides together to form the geometrically variable underdrain header mold.

31. The method of claim 28 or 29 comprising:
cutting a sheet of steel to a desired pattern;
pressing the cut sheet into the desired header form; and
welding the pressed sheet at the seams to create a continuous shell.

32. The method of any one of claims 28 to 31, comprising forming the underdrain header mold from extruded plastic.

33. The method of any one of claims 28 to 31, comprising forming the underdrain header mold from spun concrete.

34. The method of any one of claims 28 to 33, further comprising pressing channels in the sheet metal to facilitate concrete flow during the step of pouring concrete in said basin form around said mold.

35. The method of any one of claims 28 to 34, further comprising attaching an air delivery system to the underdrain header mold.
